Europäisches Patentamt

European Patent Office

Office européen des brevets

(19)

(11) Veröffentlichungsnummer: **0 032 731**
**B1**

(12) **EUROPÄISCHE PATENTSCHRIFT**

(45) Veröffentlichungstag der Patentschrift: **28.11.84**

(21) Anmeldenummer: **81100280.7**

(22) Anmeldetag: **15.01.81**

(51) Int. Cl.³: **C 08 J 7/10, C 08 J 7/12,** C 08 L 23/12

(54) **Polypropylenfolie mit verbesserter Haftung, deren Herstellung und Verwendung.**

(30) Priorität: **17.01.80 DE 3001636**

(43) Veröffentlichungstag der Anmeldung:
**29.07.81 Patentblatt 81/30**

(45) Bekanntmachung des Hinweises auf die
Patenterteilung:
**28.11.84 Patentblatt 84/48**

(84) Benannte Vertragsstaaten:
**AT BE CH DE FR GB IT LI LU NL SE**

(56) Entgegenhaltungen:
**DE-A-1 469 884**
**DE-A-1 911 804**
**FR-A-1 196 542**
**FR-A-2 370 583**
**US-A-3 296 046**

**Die Akte enthält technische Angaben, die nach dem Eingang der Anmeldung eingereicht wurden und die nicht in dieser Patentschrift enthalten sind.**

(73) Patentinhaber: **Alkor GmbH Kunststoffverkauf Morgensternstrasse 9 Postfach 71 0109 D-8000 München 71 (DE)**

(72) Erfinder: **Fink, Roland Wolfratshauserstrasse 58a D-8023 Pullach (DE)**
Erfinder: **Heitz, Heinrich, Dr. Jägerweg 11 D-8034 Germering (DE)**

(74) Vertreter: **Weickmann, Heinrich, Dipl.-Ing. et al Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820 D-8000 München 86 (DE)**

EP 0 032 731 B1

## Beschreibung

Die Erfindung betrifft eine Polypropylenfolie (PP-Folie) mit verbesserten Haftungseigenschaften, ein Verfahren zu ihrer Herstellung und ihre Verwendung.

Für viele Einsatzgebiete von Werkstoffen müssen die Gebrauchseigenschaften durch Vergütung der Oberfläche, z.B. durch Lackieren oder durch Kaschierung mit dünnen Finishfolien, verbessert werden. Zur Oberflächenvergütung von Werkstoffen, insbesondere von Metall-, Holz- und Cellulosewerkstoffen werden derzeit vorwiegend PVC und Spezialpapiere eingesetzt.

Bei Anwendung von Folien in verschiedenen Bereichen der Oberflächenvergütung ist davon auszugehen, daß die Kaschierung auf Trägermaterialien und anderen Filmen bei Temperaturen, die häufig über 100°C liegen, erfolgen soll und eine Abkühlung der Laminate in den Rollenkaschieranlagen und Pressen nicht wirtschaftlich ist, Eine höhere Wärmeformbeständigkeit ist auch notwendig bei der Kaschierung mit Reaktionsklebstoffen, die wegen der geforderten Lagerstabilität zweckmäßigerweise erste oberhalb 80°C reagieren sollten. Sie ist auch erforderlich bei Kaschierung mittels polymerer Filme, wenn im Bereich der Gebrauchstemperatur kein Delaminieren erfolgen Hinsichtlich der physialischen Eigenschaften, insbesondere der Wärmeformbeständigkeit, von PP und seinen Copolymerisaten sowie seiner Umweltfreundlichkeit wäre PP für die Oberflächenvergütung sehr geeignet. Ein entscheidender Nachteil sind jedoch die oberflächenenergetischen Stoffdaten des PP, die eine ausreichend gute, permanente Haftung geeigneter Lacke, Klebstoffe und polymerer Filme verhindern.

Der Erfindung liegt die Aufgabe zugrunde, die Haftungseigenschaften von PP-Folien durch permanente Erhöhung der oberflächenenergetischen Stoffdaten so zu verbessern, daß dauerhaft eine geeignete Bedruckung, Lackierung und Verklebung möglich wird.

Verfahren zur Verbesserung der Haftungseigenschaften von Filmen, insbesondere PP-Filmen, sind bekannt. Ein Beispiel dafür ist die Coronabehandlung, vgl. Adhäsion 1979, Heft 12, S. 381—389. Diese Behandlung erhöht zwar die Oberflächenspannung vorübergehend, der Effekt verminder sich jedoch während der Lagerung und/oder Einwirkung höherer Temperaturen.

Ein weiteres Verfahren besteht in der Flammbehandlung von Folien. Hier gelten die gleichen Nachteile wie bei der Corona-Behandlung. Weiter ist die chemische Behandlung mit Ozon, Fluor, Chlor etc. bekannt. Von Nachteil ist hier besonders die problematische Anwendung wegen der chemischen Aggressivität dieser Agenzien. Ein weiteres Verfahren besteht in der Bestrahlung mit energiereichen Strahlen, wie Elektronenstrahlen, UV-Strahlen, Laserstrahlen und dergleichen. Diese Verfahren sind relativ aufwendig, verlangen meist die Mitverwendung von Sensibilisatoren, und die Dauerhaftigkeit des Effekts ist dabei unterschiedlich.

Eine permanente Verbesserung der Oberflächenadhäsion läßt sich durch chemische Pfropfung unter Anwendung energiereicher Strahlen erzielen. Dieses Verfahren ist jedoch zu aufwendig, um für das in Betracht kommende Anwendungsgebiet geeignet zu sein.

Die permanente Erhöhung der Oberflächenspannung und der Haftung gelingt erfindungsgemäß bei einem Gehalt an feinteiliger Cellulose in der PP-Folie unter Anwendung der für PP bekannten Vorbehandlungsmethoden zur Erhöhung der Oberflächenspannung, welche sonst keinen dauerhaften Effekt ergeben.

Gegenstand der Erfindung ist daher eine Polypropylenfolie mit durch Oberflächenaktivierung verbesserten Haftungseigenschaften, welche gekennzeichnet ist durch einen Gehalt an Cellulose mit einem mittleren Teilchendurchmesser von 5 bis 100 $\mu$m und einer größten mittleren Länge der Cellulose bis 200 $\mu$m.

Der Erfindung liegt die überraschende Feststellung zugrunde, daß ein Gehalt an feinteiliger Cellulose im PP die Wirksamkeit und die Dauerhaftigkeit der Oberflächenbehandlung verbessert. Der Effekt kann noch erhöht werden, wenn die Cellulose in einem PE-Batch zugegeben wird. Einen weiteren günstigen Effekt gibt die Mitverwendung von mineralischen Füllstoffen.

Aus der FR—A 23 70 583 ist bereits ein Verbundmaterial aus Metallfolien und einem mit Carbonsäure modifizierten Polyolefin, welches cellulosische Teilchen enthält, bekannt. Hierbei wird jedoch die Haftung im wesentlichen durch die Carbonsäureanteile des Polyolefincopolymers erzielt und bezüglich der cellulosischen Teilchen werden zum Beispiel harzreiche Holzfasern, Stroh- und Papierpulpe als in gleicher Weise geeignet angegeben, während reine Cellulose nicht erwähnt wird. Außerdem wird dort keine Folie mit dem Metall verpreßt sondern eine nach der Papierherstellungstechnik gewonnene Bahn.

Im Rahmen der Erfindung geeignet sind feinteilige Cellulose, hergestellt nach dem Sulfit- oder Sulfatverfahren, die bevorzugt wird, sowie native oder regenerierte Cellulose.

Die Cellulosemenge liegt zweckmäßig zwischen 3 und 50 Gew.-%, bezogen auf die Summe von PP und Cellulose. Wird ein Gehalt von 50 Gew.-% überschritten, so werden die Festigkeitseigenschaften zu stark verschlechtert.

Bei einem Gehalt an Cellulose unter 3% ist die erzielte Verbesserung der Oberflächenaktivierung nicht ausgeprägt genug. Bevorzugt enthält die Folie 3 bis 30 Gew.-% Cellulose.

Der Feinhertsgrad der Cellulose in der erfindungsgemäßen Folie liegt zweckmäßig zwischen 1 und 100 $\mu$m bei einer Faserdicke von 10 bis 30 $\mu$m. Ein feinerer Verteilungsgrad ist zu aufwendig, bei größeren Partikeln treten Probleme bei der Herstellung glatter dünner Folien auf. Bei nativer und regenerierter Cellulose können jedoch auch Teilchen bis zu 100 $\mu$m Dicke und einer größten mittleren Länge von 200 $\mu$m verwendet werden, ohne daß hinsichtlich der Folienbildung grundsätzliche Schwierigkeiten auftreten. Mit Holzmehl wird kein vergleichbarer Haftungseffekt erreicht.

Als PP eignen sich im Rahmen der Erfindung die handelsüblichen Qualitäten, einschließlich Copolymere mit $\alpha$-Olefinen und Pfropfcopolymere mit Vinylverbindungen. Bevorzugt werden Random- und Block- Copolymere mit 1 bis 10 Mol-% Äthylen oder Mischungen mit Polyäthylen (PE), insbesondere mit 5 bis 20% PE, die eine Wärmebeständigkeit VSP/A über 100°C besitzen.

Die erfindungsgemäße Folie kann zusätzlich auch mineralische Füllstoffe enthalten. Derartige Füllstoffe für Polymerfolien sind bekannt. Besonders geeignet und daher bevorzugt werden Glimmer, Talkum, Silikate und Kieselsäuren in ihren verschiedenen Formen. Beispiele für andere brauchbare mineralische Füllstoffe sind Carbonate, insbesondere Calciumcarbonate, wie Kalkstein und Kreide, sowie Magnesiumcarbonate und dergleichen.

Durch den Zusatz geeigneter mineralischer Füllstoffe lassen sich Eigenschaften wie Vicatpunkt, Shorehärte, Haftung und Zugfestigkeit beeinflussen. Falls derartige mineralische Füllstoffe vorhanden sind, enthält die Folie zweckmäßig 3 bis 30 Gew.-%, vorzugsweise 3 bis 20 Gew.-%, bezogen auf die Summe von Polyolefin und Cellulose.

Außerdem kann die Folie noch ein oder mehrere organische Modifizierungsmittel enthalten. Diese dienen zur Regelung von Zähigkeit, Kalandrierbarkeit, Extrudierbarkeit und ähnlichen Eigenschaften. Eine bevorzugte Gruppe hierfür sind Blockpolymere von Styrol mit Elastomeren wie z.B. Butadien oder Isobutylen oder Isopren. Andere geeignete Modifizierungsmittel sind Polymerisate auf Basis Styrol-Butadien, Methacrylat-Butadien-Styrol. Polyolefine, die funktionelle Gruppen enthalten, z.B. Copolymerisat oder Pfropf-Copolymerisat von Äthylen mit reaktiven Monomeren, eignen sich besonders zur Beeinflussung spezieller physikalischer Eigenschaften und der Verklebbarkeit. Darartige Modifizierungszusätze sind zweckmäßig in einer Menge von 0,5 bis 20 Gew.-%, vorzugsweise 2 bis 10 Gew.-%, bezogen jeweils auf die Summe von Polyolefin und Cellulose, vorhanden.

Die Steigerung der Oberflächenspannung und ihrer Dauerhaftigkeit durch eine Coronabehandlung in Abhängigkeit des Celluloseanteils zeigen die in Tabelle 1 wiedergegebenen Versuchsergebnisse. Bei Herstellung der untersuchten Folien wurde die Cellulose mittels eines HD-PE-Masterbatch 1:1 zugegeben (HD-PE Hostalen® GC7260).

TABELLE 1

| Gewichts-anteil Cellulose in PP[1] | Oberflächenspannung mN/m | | | | |
|---|---|---|---|---|---|
| | unbehandelt | Coronabehandelt nach | | | |
| | | 1 Std. | 3 Tagen | 3 Wochen | 3 Monaten |
| 0 | 25 | 46 | 38 | 28 | — |
| 5 | 25 | 52 | 50 | 50 | 45 |
| 20 | 25 | 58 | 52 | 52 | 52 |

[1]PP Hostalen PPN 1060

Da bei PP eine höhere Oberflächenspannung nicht immer gleichzeitig eine höhere Haftung ergibt (siehe Adhäsion 1979, Heft 12, S. 381—389), wurden die Haftungseigenschaften mittels eines handelsüblichen Harnstoff-Formaldehyd-Klebstoffs getestet. Dabei wurden die Folienproben unter gleichen Bedingungen hergestellt und coronabehandelt und bei 140°C mit 10 kp/cm² (9,81 bar) 10 Sekunden verpreßt. Die Dauerhaftigkeit der Haftung wurde durch Wärmelagerung einen Tag bei 90°C beurteilt. Die Ergebnisse zeigt Tabelle 2.

# 0 032 731

## TABELLE 2

| Rezeptur | Oberflächenspannung mN/m | | Schälfestigkeit kp/2,4 cm (N/2,4 cm) | |
|---|---|---|---|---|
| | 1 Std. 20°C | 1 Tag 90°C | 1 Std. 20°C | 1 Tag 90°C |
| PP+0 TL+ Cellu-lose 1) | 48 | 42 | 0,1 (0,98) | 0 |
| PP+20 TL Cel-lulose 1) | 58 | 52 | 1,2 (11,8) | 1,1 (10,8) |
| PP[1)]+20 TL Cellu-lose 2) (PE/Cel-lulose-Batch) | 58 | 56 | 2,6 (25,5) | 1,9 (18,6) |

TL=Teile
1) PP Eltex K1 100
2) Batch: 50 Gew.-TL HD-PE Eltex® 2008
          50 Gew.-TL Cellulose Arbocel® B 600/30

Diese Ergebnisse zeigen, daß bei einem Gehalt an Cellulose der Effekt nicht nur wesentlich dauerhafter, sondern auch erheblich gesteigert wird, insbesondere wenn die Cellulose als PE-Batch zugegeben wird.

Ein weiterer Gegenstand der Erfindung ist ein Verfahren zur Herstellung einer PP-Folie mit verbesserter Adhäsion durch Formung der Folie nach üblichen Methoden und Anwendung einer Oberflächenaktivierungsbehandlung, welches dadurch gekennzeichnet, ist, daß man als Füllstoff feinteilige Cellulose zusetzt. Vorzugsweise werden 3 bis 50 Gew.-%, besonders bevorzugt 3 bis 30 Gew.-% Cellulose zugesetzt, bezogen auf die Summe von Polyolefin und Cellulose. Cellulosefasern eignen sich bis zu einer Länge von 200 $\mu$m bei einem mittleren Durchmesser bis 100 $\mu$m.

Bezüglich der bevorzugten Polypropylene gelten die obigen Ausführungen. Für die Herstellung der Folie eignen sich alle üblichen und dem Fachmann geläufigen Folienherstellungsmethoden und Michtechnologien.

Bei der Folienherstellung können zusätzlich mineralische Füllstoffe oder/und Modifizierungsmittel zugesetzt werden. Hierfür gelten die obigen Angaben über die Folienzusammensetzung entsprechend.

Die Ober flächenaktivierung kann durch Bestrahlung oder durch Behandlung mit einer Flamme oder Ozon erfolgen. Besonders bevorzugt wird die Corona-Behandlung, andere Bestrahlungsmethoden verwenden Elektronenstrahlen, UV-Strahlen oder Laserstrahlen.

Durch die Erfindung wird, wie bereits erwähnt, die Oberflächenadhäsion von Polypropylenfolien wesentlich gesteigert und dadurch der Einsatz derartiger Folien zum Kaschieren, Bedrucken, Lackieren und Verkleben, insbesondere bei den modernen Anlagen, welche kurze Prozeßzeiten und möglichst hohe Temperaturen anwenden, wesentlich verbessert oder überhaupt erste ermöglicht. Bei Verklebungen der erfindungsgemäßen Folie mit beispielsweise UF-Harz ergab sich auch nach Monaten noch keine Veränderung der Haftung. Die Widerstandsfähigkeit der Oberflächenaktivierung gegenüber Temperatureinfluß wird ebenfalls erheblich verbessert. Beispielsweise zeigen die Haftungen von erfindungsgemäßen Folien, die mittels UF-Harz auf Spanplatten kaschiert wurden, bei Kaschiertemperaturen zwischen 80 und 140°C bei 30 Sekunden Preßzeit keinen Unterschied.

Druckfarben, beispielsweise solche auf Basis von Terpolymeren aus Vinylchlorid-Vinylacetat-Maleinsäure von OH-Gruppen enthaltenden Vinylpolymeren, aber auch die üblichen PE-Druckfarben, weisen ebenso gute Haftung auf wie Reaktionslacke, beispielsweise auf Basis Polyurethan Melaminharzen, sowie auch UV-härtende Polyester-Epoxid und Polyurethanacrylate. Selbst nach 1000-stündiger Xenotestbewitterung und im Tropentest konnte eine Änderung der Haftung nach ASTM-Norm D 2141—63T (Gitterschnittmethod) nicht festgestellt werden.

Durch Zusatz von mineralischen Füllstoffen und/oder organischen Modifizierungsmitteln können die Eigenschaften der Folie in weitem Umfang variiert werden und die vorteilhaften Haftungseigenschaften teilweise sogar verbessert werden. Beispielsweise wird die durch Corona-Behandlung einer Folie aus 95 Teilen Polypropylen und 5 Teilen Cellulose erzielte Oberflächenadhäsion durch Zusatz von 20 oder 30 Teilen Talkum vorteilhaft beeinflußt.

Die üblichen Farbstoffe und Pigmente wirken sich nicht nachteilig aus.

Die erfindungsgemäßen Folien können auch direkt durch Schmelzverklebung mit Metallen, Holz, Polymeren und Copolymeren mit polaren Gruppen und dergleichen ohne Klebstoff verbunden werden und zeigen gute und permanente Haftung.

Die Kaschierung ist auch bei niedrigen Temperaturen, z.B. mit Epoxyharzen und Polyurethanen sowie Vinylacetat-Copolymeren möglich.

Die folgenden Beispiele erläutern die Erfindung weiter.

4

# 0 032 731

Beispiel 1

Polyàthylen (MFI 190/2=8 (g/10 min), Dichte 0,958) (Hostalen GC 7260) und Cellulose mit einer Teilchengröße <50 $\mu$ (Arbocel B 600/30) werden im Gewichtsverhältnis 1:1 gemischt, auf einem Walzwerk bei 160°C 10 Minuten homogenisiert und nach dem Abkühlen granuliert.

Von dem so erhaltenen Batch werden 10 Gew.-Teile mit 90 Gew.-Teilen PP (Mfl 190/5=3 (g/10 min), Dichte 0,905 (g/cm³)) (Hostalen PPN 1060) vermischt und als 80 $\mu$m dikker Film bei 220°C Masse-Temperatur extrudiert.

Die extrudierte Folie wird einer Corona-Behandlung unterworfen. Die Corona-Behandlung wird auf dem Demes-VM Vorbehandlungsgerät bei voller Leistung und einer Bahngeschwindigkeit von 5 m/min durchgeführt. Die behandelte Folie hat folgende Eigenschaften:

| | |
|---|---|
| Oberflächenspannung nach | 1 Std. 52 mN/m |
| | 3 Wochen 50 mN/m |
| | 3 Monaten 48 mN/m |
| nicht vorbehandelt | 25 bis 28 mN/m |
| Wärmeformbeständigkeit | VSP/A 148°C |
| Härte | Short D 69 |
| Zugfestigkeit (längs) | 30 N/mm² |

Die behandelte Folie wurde auf einer handelsüblichen Spanplatte kaschiert.
Für die Verklebung wird ein UF-Harz folgender Zusammensetzung verwendet:

100 Gew.-Teile Aerolite® 306
50 Gew.-Teile Härter W 170
70 Gew.-Teile Wasser

| Preßbedingungen: | | |
|---|---|---|
| | Temperatur | 140°C |
| | Druck | 10 kp/cm² (9,81 bar) |
| | Zeit | 10 sec |

Die Abzugskraft im Schältest beträgt 1,6 kp/2,4 cm (14,7 N/2,4 cm)

Beispiel 2 (Vergleich)

Das in Beispiel 1 verwendete PP wird im Verhältnis 95:5 mit HD-PE (Hostalen GC 7260) ohne weitere Zusätze vermischt und unter den sort angegebenen Bedingungen extrudiert, vorbehandelt und verpreßt.

| | |
|---|---|
| Oberflächenspannung nach | 1 Std. 48 mN/m |
| | 3 Wochen 28 mN/m |
| | 3 Monaten 25 mN/m |
| nicht vorbehandelt | 25 mN/m |
| Wärmeformbeständigkeit | VSP/A 145°C |
| Härte | Short D 68 |
| Zugfestigkeit längs | 28 N/mm² |
| Abzugskraft im Schältest | 0,1 kg/2,4 cm (0,98N/2,4 cm) |

Beispiel 3

Eine Mischung aus 80 Gew.-Teilen von einem PP-Copolymer (Mfl 230/2=1,8 g/10 min, Dichte 0,92 g/cm³) (Eltex K1 100) und 20 Gew.-Teilen Cellulose Arbocel (B 600/50) und den üblichen Zusätzen wird bei 200°C zu einer 100 $\mu$m dicken Folie kalandriert. Die Vorbehandlung und Verklebung erfolgt entsprechend Beispiel 1.

Folgende Werte werden gemessen:

5

| Oberflächenspannung nach | 1 Stunde 58 mN/m<br>3 Wochen 52 mN/m<br>3 Monaten 52 mN/m |
|---|---|
| nicht vorbehandelt | 25 mN/m |
| Wärmeformbeständigkeit | VSP/A 150°C |
| Härte | Short D 72 |
| Zugfestigkeit längs | 32 N/mm² |
| Abzugskraft im Schältest | 1,3 kp/2,4 cm (12,7N/2,4 cm) |

Beispiel 4

Eine Mischung aus 80 Gew.-Teilen PP entsprechend Beispiel 3 und 40 Gew.-Teilen eines Batch aus 20 Teilen Cellulose (Arbocel BÖ 600/50) und 20 Teilen HD-PE (Mfl 190/5=1 (g/10 min), Dichte 0,950 g/cm³) (Eltex B 2008) wird entsprechend Beispiel 3 kalandriert, vorbehandelt und verpreßt. Folgende Werte werden ermittelt:

| Oberflächenspannung nach | 1 Stunde 58 mN/m<br>3 Wochen 58 mN/m<br>3 Monaten 56 mN/m |
|---|---|
| nicht vorbehandelt | 25 mN/m |
| Wärmeformbeständigkeit | VSP/A 148°C |
| Härte | Short D 67 |
| Zugestigkeit längs | 26 N/mm² |
| Abzugskraft im Schältest | 2,6 kp/2,4 cm (25,5N/2,4 cm) |

Beispiel 5

Eine Mischung aus 80 Gew.-Teilen PP entsprechend Beispiel 3 und 20 Gew.-Teilen Cellulose (Arbocel BÖ 600/50) und 20 Gew.-Teilen Calciumcarbonat (Omya® BSH) wird entsprechend Beispiel 3 kalandriert und vorbehandelt. Folgende Ergebnisse werden ermittelt:

| Oberflächenspannung nach | 1 Stunde 58 mN/m<br>3 Wochen 56 mN/m<br>3 Monaten 56 mN/m |
|---|---|
| nicht vorbehandelt | 25 mN/m |
| Wärmeformbeständigkeit | VSP/A 155°C |
| Härte | Shore D 72 |
| Zugfestigkeit längs | 35 N/mm² |
| Abzugskraft im Schältest | 2,6 kp/2,4 cm (25,5 N/2,4 cm) |

Beispiel 6

95 Gew.-Teile einer Mischung entsprechend Beispiel 3 werden 5 Gew.-Teilen SBS-Blockcopolymer (Cariflex®1102) zugesetzt und entsprechend Beispiel 3 verarbeitet. Beim Kalandrieren zeigt sich, daß bei 20% höherer Geschwindigkeit noch eine gute Folie hergestellt werden kann.

Die gemessenen mechanischen und Haftungseigenschaften werden nicht nachteilig beeinflußt.

Die erhaltene Folie wird mit einem üblichen Polyurethan-Lack (Basis Desmophen® 1340 und Desmodur® H1) lackiert.

Im Haftungstest nach ASTM D.2.1.4.1.-63 erfolgt keine Trennung der Lackschicht.

Beispiel 7

Eine Mischung aus 80 Gew.-Teilen eines PP-Copolymeren gemäß Beispiel 3 (K1 100), 20 Gew.-

**0 032 731**

Teilen Cellulose (Arbocel B 600/50), 20 Gew.-Teilen Talkum und den üblichen Zusätzen wird bei 200°C zu einer 100 µm dicken Folie kalandriert, entsprechend Beispiel 1 aktiviert und mittels einer 50 µm dicken Folie aus Haftvermittler KR 2683 bei 130°C, 10 s und 10 kp/cm²) auf eine Spanplatte verpreßt.

Bei Abzug des Folienverbunds von der Spanplatte erfolgt Spanausriß.

Beispiel 8

Eine Folie gemäß Beispiel 7 wird mittels eines Epoxyklebers (Firma Daubert International 1 TDC 8160 BHV+1 TDC 8160 AHV) bei Raumtemperatur und 5 kp/cm² (4,9 bar) 24 Stunden verpreßt.

Beim Abzugstest ist die Folie gerissen.

**Patentansprüche**

1. Polypropylen-Folie mit durch Oberflächenaktivierung verbesserten Haftungseigenschaften, gekennzeichnet durch einen Gehalt an Cellulose mit einem mittleren Teilchendurchmesser von 5 bis 100 µm einer größten mittleren Länge der Cellulose bis 200 µm.

2. Folie nach Anspruch 1, dadurch gekennzeichnet, daß sie 3 bis 50 Gew.-% Cellulose enthält, bezogen auf die Summe von Polyolefin und Cellulose.

3. Folie nach Anspruch 2, dadurch gekennzeichnet, daß sie 3 bis 30 Gew.-% Cellulose enthält.

4. Folie nach einander Ansprüche 1—3, dadurch gekennzeichnet, daß sie nach dem Sulfid- oder Sulfatverfahren hergestellte Cellulose enthält, welche eine Dicke von 10 bis 30 µm und eine Länge von 5 bis 100 µm besitzt.

5. Folie nach einem der vorhergehenden Ansprüche, dadurch gekennzeichnet, daß das Polypropylen ein statistisches oder Blockcopolymer mit 1 bis 10 Mol-% Äthylen oder eine Mischung mit Polyäthylen mit einer Wärmebeständigkeit VSP/A über 100°C ist.

6. Folie nach einem der vorhergehenden Ansprüche, dadurch gekennzeichnet, daß die Oberfläche durch Bestrahlung aktiviert ist.

7. Folie nach Anspruch 6, dadurch gekennzeichnet, daß die Oberfläche durch Corona-Behandlung aktiviert ist.

8. Folie nach Anspruch 6, dadurch gekennzeichnet, daß die Oberfläche durch Elektronenbestrahlung, UV-Bestrahlung oder/und Laserbestrahlung aktiviert ist.

9. Folie nach einem der Ansprüch 1 bis 5, dadurch gekennzeichnet, daß die Oberfläche durch Behandlung mit einer Flamme oder mit Ozon aktiviert ist.

10. Folie nach einem der vorhergehenden Ansprüche, dadurch gekennzeichnet, daß sie suzätzlich mineralische Füllstoffe enthält.

11. Folie nach Anspruch 10, dadurch gekennzeichnet, daß sie Glimmer, Talkum, Kieselsäure oder Silikate und $TiO_2$ enthält.

12. Folie nach Anspruch 10 oder 11, dadurch gekennzeichnet, daß sie 1 bis 50 Gew.-% mimeralische Füllstoffe enthält, bezogen auf die Summe von Polyolefin und Cellulose.

13. Folie nach einem der vorhergehenden Ansprüche, dadurch gekennzeichnet, daß sie zusätzlich ein organisches Modifizierungsmittel enthält.

14. Folie nach Anspruch 13, dadurch gekennzeichnet, daß das Modifizierungsmittel auf Styrol und Elastomeren basiert.

15. Folie nach Anspruch 14, dadurch gekennzeichnet, daß das Elastomer ein Blockcopolymer von Styrol mit Butadien oder Styrol mit Isobutylen oder Styrol mit Isopren ist.

16. Folie nach Anspruch 13, dadurch gekennzeichnet, daß das Modifizierungsmittel ein Copolymerisat oder Pfropf-Copolymerisat von Äthylen mit reaktiven Monomeren ist.

17. Folie nach einem der Ansprüche 13 bis 16, dadurch gekennzeichnet, daß sie 0,5 bis 20 Gew.-% Modifizierungsmittel enthält, bezogen auf die Summe von Polyolefin und Cellulose.

18. Verfahren zur Herstellung einer Polypropylenfolie mit verbesserten Haftungseigenschaften durch Formung der Folie nach üblichen Methoden und Anwendung einer Oberflächenaktivierungsbehandlung, dadurch gekennzeichnet, daß man feinteilige Cellulose mit einem mittleren Teilchendurchmesser von 5 bis 100 µm bzw. einer größten mittleren Länge von 200 µm zusetzt.

19. Verfahren nach Anspruch 18, dadurch gekennzeichnet, daß man 1 bis 50 Gew.-% Cellulose zusetzt, bezogen auf die Summe von Polyolefin und Cellulose.

20. Verfahren nach Anspruch 19, dadurch gekennzeichnet, daß man 3 bis 30 Gew.-% Cellulose zusetzt.

21. Verfahren nach einem der Ansprüche 18 bis 20, dadurch gekennzeichnet, daß das Polypropylen ein statistisches oder Blockcopolymer mit 1 bis 10 Mol-% Äthylen oder eine Mischung mit Polyäthylen mit einer Wärmebeständigkeit VSP/A über 100°C ist.

22. Verfahren nach einem der Ansprüche 18 bis 21, dadurch gekennzeichnet, daß man die Oberfläche durch Bestrahlung aktiviert.

23. Verfahren nach Anspruch 22, dadurch gekennzeichnet, daß man zur Oberflächenaktivierung eine Corona-Behandlung vornimmt.

7

**0 032 731**

24. Verfahren nach Anspruch 22, dadurch gekennzeichnet, daß man zur Oberflächenaktivierung eine Elektronenbestrahlung, UV-Bestrahlung oder/und Laserbestrahlung durchführt.

25. Verfahren nach einem der Ansprüche 18 bis 21, dadurch gekennzeichnet, daß man die Oberfläche durch Behandlung mit einer Flamme oder mit Ozon aktiviert.

26. Verfahren nach einem der Ansprüche 18 bis 25, dadurch gekennzeichnet, daß man der Folienmasse auch mineralische Füllstoffe zusetzt.

27. Verfahren nach Anspruch 26, dadurch gekennzeichnet, daß man der Folienmasse Glimmer, Talkum, Kieselsäure, Silikate oder $TiO_2$ zusetzt.

28. Verfahren nach Anspruch 26 oder 27, dadurch gekennzeichnet, daß man der Folienmasse 1 bis 50 Gew.-% mineralische Füllstoffe zusetzt, bezogen auf die Summe von Polyolefin und Cellulose.

29. Verfahren nach einem der Ansprüche 18 bis 28, dadurch gekennzeichnet, daß man der Folienmasse ein organisches Modifizierungsmittel zusetzt.

30. Verfahren nach Anspruch 29, dadurch gekennzeichnet, daß das Modifizierungsmittel auf Styrol und Elastomeren basiert.

31. Verfahren nach Anspruch 30, dadurch gekennzeichnet, daß man als Elastomeres ein Block-Copolymer von Styrol mit Butadien oder Styrol mit Isobutylen oder Styrol mit Isopren verwendet.

32. Verfahren nach Anspruch 29, dadurch gekennzeichnet, daß man zur Modifizierung Copolymerisat oder Pfropf-Copolymerisat von Äthylen und reaktiven Monomeren verwendet.

33. Verfahren nach einem der Ansprüche 29 bis 32, dadurch gekennzeichnet, daß man 0,5 bis 20 Gew.-% Modifizierungsmittel zusetzt, bezogen auf die Summe von Polyolefin und cellulose.

34. Verwendung einer Folie nach einem der vorhergehenden Ansprüche zur Heiß- und Kaltkaschierung mit oder ohne Klebstoff, Bedruckung oder Lackierung.

**Claims**

1. Polypropylene film with adhesion properties improved by surface activation, characterised by a content of cellulose with an average particle diameter of 5 to 100 $\mu$m. and a greatest average length of the cellulose of up to 200 $\mu$m.

2. Film according to claim 1, characterised in that it contains 3 to 50 wt.% of cellulose, referred to the sum of polyolefin and cellulose.

3. Film according to claim 2, characterised in that it contains 3 to 30 wt.% of cellulose.

4. Film according to one of claims 1—3, characterised in that it contains cellulose produced by the sulphide or sulphate process which possesses a thickness of 10 to 30 $\mu$m. and a length of 5 to 100 $\mu$m.

5. Film according to one of the preceding claims, characterised in that the polypropylene is a statistical or block co-polymer with 1 to 10 mole % of ethylene or a mixture of polyethylene or a mixture with polyethylene with a thermal stability VSP/A of over 100°C.

6. Film according to one of the preceding claims, characterised in that the surface is activated by irradiation.

7. Film according to claim 6, characterised in that the surface is activated by corona treatment.

8. Film according to claim 6, characterised in that the surface is activated by electron irradiation, UV irradiation and/or laser irradiation.

9. Film according to one of claims 1 to 5, characterised in that the surface is activated by treatment with a flame or with ozone.

10. Film according to one of the preceding claims, characterised in that it additionally contains mineral filling materials.

11. Film according to claim 10, characterised in that it contains mica, talc, silicic acid, silicates or $TiO_2$.

12. Film according to claim 10 or 11, characterised in that it contains 1 to 50 wt.% of mineral filling material, referred to the sum of polyolefin and cellulose.

13. Film according to one of the preceding claims, characterised in that it additionally contains an organic modifying agent.

14. Film according to claim 13, characterised in that the modifying agent is based upon styrene and elastomers.

15. Film according to claim 14, characterised in that the elastomer is a block co-polymer of styrene with butadiene or styrene with isobutylene or styrene with isoprene.

16. Film according to claim 13, characterised in that the modifying agent is a co-polymer or graft co-polymer of ethylene with reactive monomers.

17. Film according to one of claims 13 to 16, characterised in that it contains 0.5 to 20 wt.% of modifying agent, referred to the sum of polyolefin and cellulose.

18. Process for the production of a polypropylene film with improved adhesion properties by forming of the film according to conventional methods and use of a surface activation treatment, characterised in that one adds finely divided cellulose with an average particle diameter of 5 to 100 $\mu$m. and a greatest average length of 200 $\mu$m.

8

19. Process according to claim 18, characterised in that one adds 1 to 50 wt.% of cellulose, referred to the sum of polyolefin and cellulose.

20. Process according to claim 19, characterised in that one adds 3 to 30 wt.% of cellulose.

21. Process according to one of claims 18 to 20, characterised in that the polypropylene is a statistical or block co-polymer with 1 to 10 mole% ethylene or a mixture with polyethylene with a heat resistance VSP/A of over 100°C.

22. Process according to one of claims 18 to 21, characterised in that one activates the surface by irradiation.

23. Process according to claim 22, characterised in that one carries out a corona treatment for the surface activation.

24. Process according to claim 22, characterised in that for the surface activation one carries out an electron irradiation, UV irradiation and/or laser irradiation.

25. Process according to one of claims 18 to 21, characterised in that one activates the surface by treatment with a flame or with ozone.

26. Process according to one of claims 18 to 25, characterised in that one also adds mineral filling materials to the film mass.

27. Process according to claim 26, characterised in that one adds to the film mass mica, talc, silicic acid, silicates or $TiO_2$.

28. Process according to claim 26 or 27, characterised in that one adds to the film mass 1 to 50 wt.% of mineral filling material, referred to the sum of polyolefin and cellulose.

29. Process according to one of claims 18 to 28, characterised in that one adds an organic modifying agent to the film mass.

30. Process according to claim 29, characterised in that the modifying agent is based upon styrene and elastomers.

31. Process according to claim 30, characterised in that as elastomer one uses a block co-polymer of styrene with butadiene or styrene with isobutylene or styrene with isoprene.

32. Process according to claim 29, characterised in that for the modification one uses co-polymers or graft co-polymers of ethylene and reactive monomers.

33. Process according to one of claims 29 to 32, characterised in that one adds 0.5 to 20 wt.% of modifying agent, referred to the sum of polyolefin and cellulose.

34. Use of a film according to one of the preceding claims for hot or cold laminating with or without adhesive, printing or lacquering.

## Revendications

1. Feuille de polypropylène ayant des propriétés d'adhérence améliorées par activation de surface, caractérisée en ce qu'elle comprend de la cellulose avec un diamètre moyen de particules de 5 à 100 $\mu$m et une longueur moyenne maximale de cellulose jusqu'à 200 $\mu$m.

2. Feuille selon la revendication 1, caractérisée en ce qu'elle renferme de 3 à 50% en poids de cellulose par rapport au total de polyoléfine et de cellulose.

3. Feuille selon la revendication 2, caractérisée en ce qu'elle renferme de 3 à 30% en poids de cellulose.

4. Feuille selon l'une des revendications 1 à 3, caractérisée en ce qu'elle renferme de la cellulose préparée selon le procédé au sulfite ou au sulfate, ayant une épaisseur de 10 à 30 $\mu$m et une longueur de 5 à 100 $\mu$m.

5. Feuille selon l'une des revendications précédentes, caractérisée en ce que le polypropylène est un copolymère statistique ou un copolymère séquence avec 1 à 10 moles % d'éthylène ou un mélange avec du polyéthylène avec une résistance à la chaleur VSP/A supérieure à 100%.

6. Feuille selon l'une quelconque des revendications précédentes caractérisée en ce que la surface est activée par irradiation.

7. Feuille selon la revendication 6, caractérisée en ce que la surface est activée par décharge corona.

8. Feuille selon la revendication 6, caractérisée en ce que la surface est activée par irradiation d'électrons, rayonnement UV ou rayonnement laser.

9. Feuille selon l'une des revendications 1 à 5, caractérisée en ce que la surface est activée par traitement avec une flamme ou avec de l'ozone.

10. Feuille selon l'une des revendications précédentes, caractérisée en ce qu'elle renferme une charge minérale additionnelle.

11. Feuille selon la revendication 10, caractérisée en ce qu'elle renferme du mica, du talc, des silices ou du silicate et $TiO_2$.

12. Feuille selon la revendication 10 ou 11, caractérisée en ce qu'elle renferme de 1 à 50% en poids de charge minérale, par rapport au total de polyoléfine et de cellulose.

13. Feuille selon l'une des revendications précédentes caractérisée en ce qu'elle renferme en outre un agent organique de modification.

14. Feuille selon la revendication 13, caractérisée en ce que l'agent de modification est à base de styrène et d'élastomère.

15. Feuille selon la revendication 14, caractérisée en ce que l'élastomère est un copolymère séquence de styrène avec du butadiène ou de styrène avec de l'isobutylène ou de styrène avec de l'isoprène.

16. Feuille selon la revendication 13, caractérisée en ce que l'agent de modification est un copolymérisat ou un copolymérisat greffé d'éthylène avec des monomères réactifs.

17. Feuille selon l'une des revendications 13 à 16, caractérisée en ce qu'elle renferme de 0,5 à 20% en poids d'agent de modification, par rapport au total de polyoléfine et de cellulose.

18. Procédé de préparation d'une feuille de polypropylène possédant des propriétés d'adhérence améliorées par formation d'une feuille selon les méthodes classiques et utilisation d'un traitement d'activation de surface, caractérisé par le fait qu'on met en oeuvre de la cellulose finement divisée avec un diamètre moyen de particules de 5 à 100 $\mu$m et une longueur moyenne maximale de 200 $\mu$m.

19. Procédé selon la revendication 18, caractérisé en ce qu'on utilise de 1 à 50% en poids de cellulose, par rapport au total de polyoléfine et de cellulose.

20. Procédé selon la revendication 19, caractérisé en ce qu'on ajoute de 3 à 30% en poids de cellulose.

21. Procédé selon l'une des revendications 18 à 20, caractérisé en ce que le polypropylène est un copolymère statistique ou un copolymère séquence avec 1 à 10 moles % d'éthylène ou d'un mélange de polyéthylène avec une résistance à la chaleur VSP/A supérieure à 100°C.

22. Procédé selon l'une des revendications 18 à 21, caractérisé en ce que la surface est activée par irradiation.

23. Procédé selon la revendication 22, caractérisé en ce qu'on applique une décharge corona pour l'activation de la surface.

24. Procédé selon la revendication 22, caractérisé en ce qu'on réalise l'activation de la surface par rayonnement d'électrons, rayonnement UV et/ou rayonnement laser.

25. Procédé selon l'une des revendications 18 à 21, caractérisé en ce qu'on active la surface par traitement à l'aide d'une flamme ou d'ozone.

26. Procédé selon l'une des revendications 18 à 25, caractérisé en ce qu'on ajoute également à la masse de la feuille une charge minérale.

27. Procédé selon la revendication 26, caractérisé en ce qu'on ajoute à la masse de la feuille du mica, du talc, des silices, du silicate ou $TiO_2$.

28. Procédé selon la revendication 26 ou 27, caractérisé en ce qu'on ajoute à la masse de la feuille de 1 à 50% en poids de charge minérale, par rapport au total de polyoléfine et de cellulose.

29. Procédé selon l'une des revendications 18 à 28, caractérisé en ce qu'on ajoute à la masse de la feuille un agent de modification organique.

30. Procédé selon la revendication 29, caractérisé en ce que l'agent de modification est à base de styrène et d'élastomère.

31. Procédé selon la revendication 30, caractérisé en ce qu'on utilise en tant qu'élastomère un copolymère séquence de styrène et de butadiène ou de styrène et d'isobutylène ou de styrène et d'isoprène.

32. Procédé selon la revendication 29, caractérisé en ce qu'on utilise, pour la modification, un copolymérisat ou un copolymérisat greffé d'éthylène et de monomères réactifs.

33. Procédé selon l'une des revendications 29 à 32, caractérisé en ce qu'on ajoute de 0,5 à 20% en poids d'agent de modification, par rapport au total de polyoléfine et de cellulose.

34. Utilisation d'une feuille selon l'une quelconque des revendications précédentes pour doublage à chaud ou à froid avec ou sans colle, pression ou vernissage.